# EUROPEAN PATENT SPECIFICATION

(11) **EP 1 395 756 B1**
(45) Date of publication and mention of the grant of the patent: **09.11.2005**
(21) Application number: 02743362.2
(22) Date of filing: 10.06.2002
(51) Int. Cl.: F04C 29/00, F01C 21/10, H02K 7/09, F04C 18/16

(54) **SCREW COMPRESSOR WITH SWITCHED RELUCTANCE MOTOR**
SCHRAUBENVERDICHTER MIT EINEM MOTOR MIT GESCHALTETER RELUKTANZ
COMPRESSEUR HELICOIDAL COMPORTANT UN MOTEUR A RELUCTANCE POSSEDANT UNE CARACTERISTIQUE DE COMMUTATION

(30) Priority: 11.06.2001 GB 0114149
(43) Date of publication of application: 10.03.2004
(73) Proprietor: Compair UK Limited, High Wycombe, Buckinghamshire HP13 5SF (GB)
(72) Inventor: NICHOL, Philip, High Wycombe, Buckinghamshire HP13 5PB (GB)
(74) Representative: Bucks, Teresa Anne
(86) International application number: PCT/GB2002/002641
(87) International publication number: WO 2002/101244

(56) References cited:
- EP-A- 1 101 942
- DE-A- 4 111 466
- DE-A- 10 042 545
- US-A- 4 758 132
- US-A- 5 246 349
- US-A- 6 015 272
- PATENT ABSTRACTS OF JAPAN vol. 2000, no. 07, 29 September 2000 (2000-09-29) -& JP 2000 097186 A (HITACHI LTD), 4 April 2000 (2000-04-04)

## Description

The invention relates to improvements in compressors and in particular to arrangements for driving screw compressors by switched reluctance drive motors.

Screw compressors are used in a variety of different applications for delivering compressed air, or other gasses, at a required pressure and volume. The speed at which the one or more stages of the compressor is driven is determined by the delivery requirements. Induction motors are currently used to drive the majority of industrial screw compressors. However, the design of such motors has a major effect on its behaviour and performance and seldom has it been possible to match the compressor speed with the speeds available from standard induction motors. To overcome this problem a belt drive system or gearbox is used. Then, by changing the drive ratio, a number of discrete outputs may be obtained for running a compressor at different speeds.

Where gears and belts are used to drive the compressor substantial extra loads are added to the compressor bearings due to the tension forces in the belts or the drive loads from the gears. There is also a reduction in efficiency as the belts or gears incur a drive loss.

More recently the use of inverter drives with induction motors has meant that standard motors may be run at infinitely variable speeds within the capabilities of the motors. Due to the use of induction motors this still means that there is an upper limit on the speed determined by the design of the motor. For example two pole motors run normally at around 3600 rpm on a 60Hz supply with the use of an inverter they may be run to perhaps 4500 rpm, depending on the motor design. In small screw compressors speeds in excess of this are commonly required.

In most cases the induction motor is a self-contained unit coupled to the compressor through a flexible coupling.

Also, generally speaking induction motors are air-cooled which, when used with a rotary compressor, gives rise to fan losses and can lead to possible damage to the motor due to air borne contaminants. The noise generated by the fan is a significant contributor to the noise of the motor especially at high speeds.

EP-A-1041289 recognises the need to dispense with a gear assembly in a compressor assembly and to provide a direct link between the compressor and motor. It therefore describes a rotary compressor driven by a switched reluctance motor, wherein the impeller of the compressor is mounted on a drive shaft assembly, on which the rotor of the switched reluctance motor is also mounted.

However EP-A-1041289 is specifically directed towards a two stage centrifugal or axial flow compressor as opposed to a screw compressor. Centrifugal compressors operate in a very different speed range to screw compressors, generally in excess of 50,000 rpm, whereas most screw compressors operate at below 25,000 rpm.

US 5,246,349 discloses a screw compressor that is used as a vacuum pump. The screw compressor is driven at variable speeds by a variable reluctance motor. A problem with variable reluctance motors can be the generation of acoustic noise due to the interaction of the rotor with the stator. One reason for the generation of acoustic noise is that, rather than having a smooth cylindrical surface, the rotor has prominent poles that extend radially from the rotor. Acoustic noise is generated when the poles pass the stator, separated by only a small air gap from the stator. The screw compressor has a suction port and a discharge port. To reduce the problem of acoustic noise, the motor is arranged in fluid communication with the suction port of the screw compressor. The motor has a gas inlet and a gas outlet. Gas can flow through the interior of the motor from the gas inlet to the gas outlet. The gas outlet of the motor is in fluid communication with the suction port of the compressor. When the motor is used to drive the screw compressor, the pressure of gas within the motor is less than atmospheric pressure, thereby reducing the density of gas within the motor and hence reducing the acoustic noise.

It is an object of the present invention to provide a screw compressor assembly which reduces disadvantages in the prior art by the use of a switched reluctance drive motor, where the rotor of the motor is mounted directly on an extension of the compressor drive shaft. Dispensing with the flexible coupling between the motor and compressor also leads to a saving in cost and enables a more compact machine to be produced.

The invention provides a screw compressor assembly as set out at claim 1, and an assembly method as set out at claim 13.

The design of the motor can be matched to the characteristics of the screw compressor in terms of torque and speed. The switched reluctance motor may also be designed to run at almost any speed and its speed is infinitely variable within its designed speed range. An additional benefit is that the axial magnetic forces available from the rotor of the motor are used to affect the axial bearing loads in the compressor.

Where the application is in liquid injected compressors the cooling liquid for the compressor may be circulated around the stator of the motor to provide cooling for the motor. This has the benefit over an air-cooled motor of being able to seal the motor thus reducing noise (especially important in high-speed drives) and improving reliability.

A preferred embodiment of the invention will now be described, by way of example only, with reference to the accompanying drawings, in which:-
Fig. 1 is a cross-sectional front elevation of a section of a rotary screw compressor according to the invention showing the mounting of the switched reluctance drive motor with the motor rotor displaced away from the compressor;
Fig. 2 is a schematic of the screw compressor of the present invention; and
Fig. 3 is similar to Fig. 1, but shows the motor rotor displaced in the opposite direction.

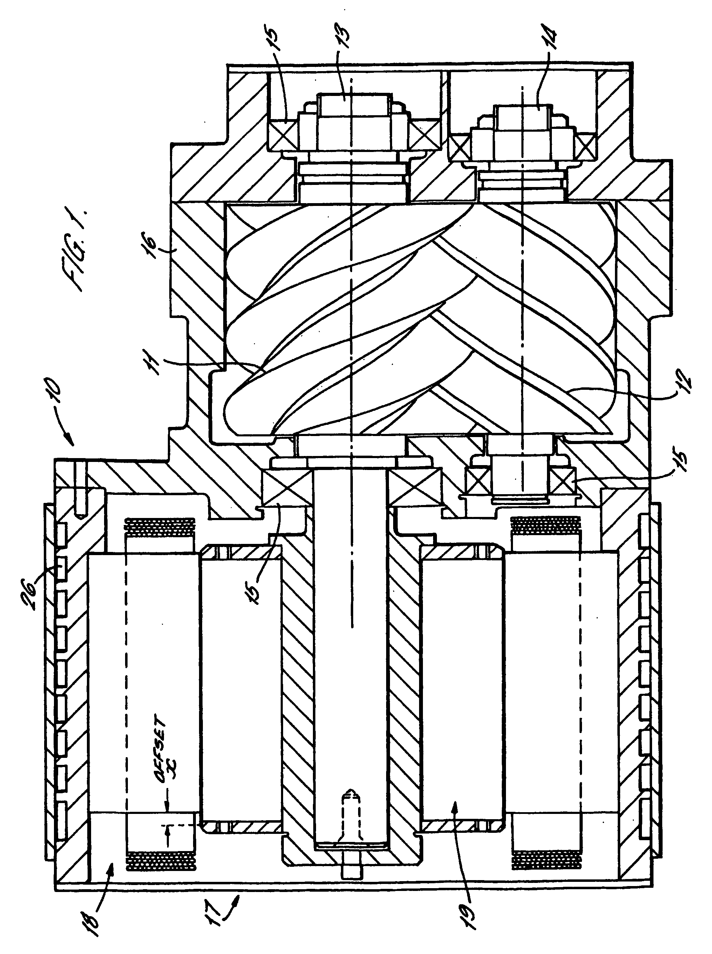

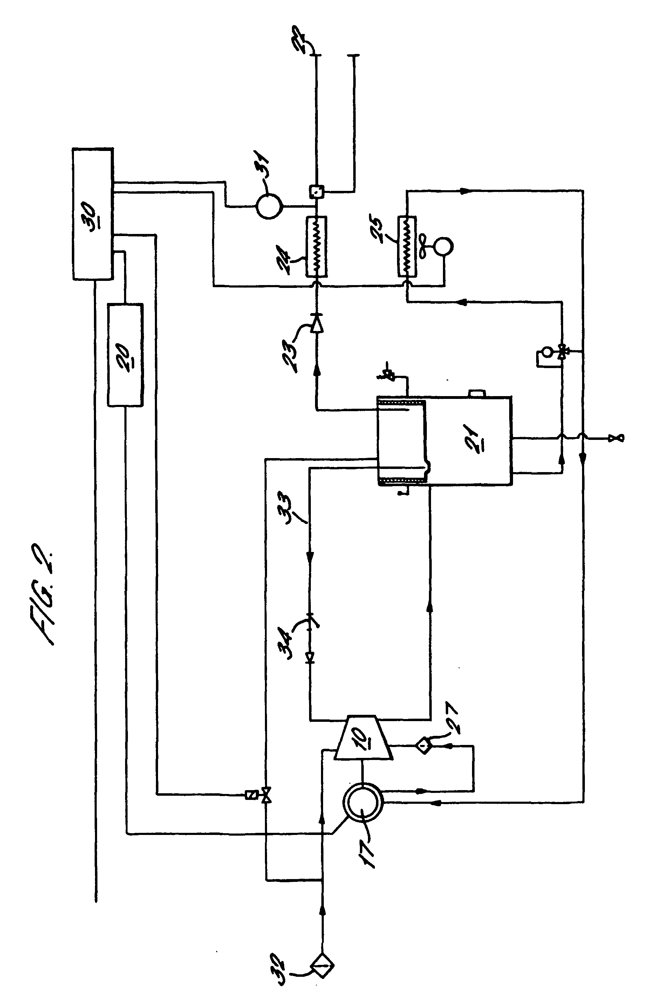

The embodiment of the invention illustrated in Figs. 1 and 2 is a single stage liquid-injected screw compressor assembly, although most of the features may be applied to an oil-free screw compressor or other types of single or multi-stage screw compressor. Fig. 1 shows a section of a single stage liquid-injected screw compressor (10) consisting of a pair of contra-rotating, helically cut fluted rotors (11, 12) mounted respectively on rotor shafts (13, 14) which are supported at each end in rolling bearings (15) in a rigid compressor casing (16). One of the rotor shafts (13), on which a "driven" rotor (11) is mounted is extended with respect to the other rotor shaft (14).

The drive motor (17) used to drive the compressor (10) is a switched reluctance motor. Switched reluctance motors suitable for use in the present invention are already known in the art, such as described in EP-A-0702448. In this type of motor both the stator (18) and the rotor (19) have projecting poles. The rotor (19) has no permanent magnets or windings. Thus, when one of the phases of the stator (18) is energised, the closest set of poles of the rotor (19) are pulled into alignment. As each consecutive phase is energised, the rotor (19) is caused to rotate. Switched reluctance machines with different numbers of phases are well known in the art.

In the present invention, the rotor (19) of the switched reluctance motor (17) is attached to the extended rotor shaft (13) using a locking system, such as a taper or a parallel shaft with a key, to ensure concentricity and transmission of torque. The rotor (19) has no bearings and is overhung and therefore entirely supported by the compressor bearings (15). The stator (18) is attached to the compressor casing (16) so that it is concentric to the motor rotor (19).

Referring to Fig. 2, in operation a magnetic field is generated in the motor stator (18) which causes the motor rotor (19) to turn which rotates the driven compressor rotor (11). The motor (17) is connected to a power converter (20), in which a three phase electrical supply is rectified to produce dc voltage, which is then switched to the stator windings in a controlled manner to generate the necessary torque to produce the required rotational speed. The speed may be set to a fixed value manually or varied to maintain a specific value, calculated by a controller (30) to maintain a parameter such as compressor pressure within certain pre-set limits.

The rotation of the driven compressor rotor (11) transfers drive to the second rotor (12). This action induces air into the compressor (10) through a filter (32) via an inlet port at an inlet end of the compressor (10). As the rotors (11, 12) continue to rotate the reduction in the volume between them and the casing (16) causes the trapped volume of air to be compressed. The compressor (10) is preferably driven at a speed lying in the range of 500 to 25,000 rpm and more preferably in the range of 1000 to 10,000 rpm. The compressed air is expelled via a delivery port at the delivery end of the compressor (10).

In this embodiment of the invention liquid is injected into the compressor (10) during compression to cool, seal and lubricate the compressor (10). The compressed air/liquid mixture is passed to a separator vessel (21) where the liquid is separated and the air leaves the compressor (10) at a compressor outlet (22) usually through a non-return valve (23) and aftercooler (24). A small amount of liquid which has coalesced in the separator (21) is returned to the compressor (10) via a scavenge line (33) and strainer (34).

The rest of the coolant liquid is passed, due to differential pressure in the system, from the separator vessel (21) through a radiator (25) and is then used to cool the stator (18) of the motor by passing through a cooling jacket (26), which is in close proximity to the stator windings. From the motor cooling jacket (26) the coolant is passed through a filter (27) and then back to the compressor (10) where the coolant is injected into the compressed air and is used to lubricate the compressor bearings (15).

In another embodiment of the invention, the motor may be air-cooled using a fan that would pass ambient air over or through the motor windings.

To control the speed of the motor, pressure is sensed at the compressor delivery point by a pressure transmitter (31). This signal is passed to the controller (30) which in turn operates the power converter (20) to increase or reduce the speed of the motor until the desired pressure is reached.

Within a rotary screw compressor (10) the bearings (15) that support the rotors (11, 12) are designed to absorb radial and axial loads. The radial and axial loads are produced from a number of sources including gas loads, drive force resultants and the weight of the rotating parts. In a screw compressor (10) the dominant load is often an axial force on the rotors (11, 12) acting from the delivery end towards the inlet end of the rotors (11, 12). Traditionally the load on the axial load-carrying bearings (15) has been off-set by a number of means such as using the axial component of the thrust of a helical drive gear or by using a balance piston arrangement fed by either pressurised air or lubricant. However with the drive arrangement used in the present invention the axial loads are offset by arranging the position of the motor rotor (19) within the stator (18) so that there is a resultant magnetic force acting in the desired direction. This force can be generated where the motor rotor (19) is designed to run offset from the centre of the magnetic field generator in the stator windings. This force can be produced to act in either direction depending on the axial position of the rotor (19) relative to the stator (18). In the preferred embodiment of the invention this force acts towards the delivery end of the driven rotor (11) to relieve the effects of the axial gas thrust on the delivery end axially loaded bearing of the driven rotor (11).

Where the axial force exerted by the stator flux on the motor rotor (19) is used to reduce the axial load on the driven compressor rotor bearings (15) whilst running on load, as shown in Fig. 1, the motor rotor (19) is displaced axially away from the compressor rotors (11, 12) by a small distance (x). This distance would be determined by experiment for a given motor design. Motors where the rotor (19) is designed to be central in the stator (18) to have neutral axial forces are well known in the art. The amount of unbalanced magnetic pull (UMP) would be designed to equate to about 50% of the calculated axial load on the compressor bearings (15) at the highest load condition. Thus when the motor (17) is energised, the gas loads caused by compression will act towards the compressor inlet end, that is towards the motor (17) and the axial loads generated by the flux in the motor (17) will be opposite, that is towards the compressor rotors (11, 12). It is known in the art that the axial forces generated in the motor (17) increase as the applied torque increases. Similarly in the compressor rotors (11, 12) the axial loads on the bearings (15) will increase with increasing pressure and speed which corresponds with torque. Thus the load on the compressor axial bearings (15) caused by the gas loads and drive load components will be offset by the opposite acting magnetic loads from the motor rotor (19).

An enhancement of this embodiment of the invention is where the axial forces on the motor rotor (19), which are known in the art to be cyclic, are produced so as to be in phase with the cyclic axial loads from the compressor rotors (11, 12). In a screw compressor (10) the maximum axial load is known to take place at the point before the trapped volume of gas is released into the delivery port. The number of times this takes place in a revolution is dependent on the number of lobes on the male rotor, i.e. for a four-lobed male rotor there will be four peaks per revolution. Similarly in the motor (17) the peak axial force takes place when the maximum flux is acting upon the motor rotor (19), so for a rotor (19) with four poles on it this will take place four times per revolution. Thus by arranging the points of peak load in the compressor rotors (11, 12) to coincide with the points of peak axial load acting in the opposite direction in the motor rotor (19), the forces are in phase. Thus the maximum benefit may be obtained in reducing the loads on the axial load carrying bearings.

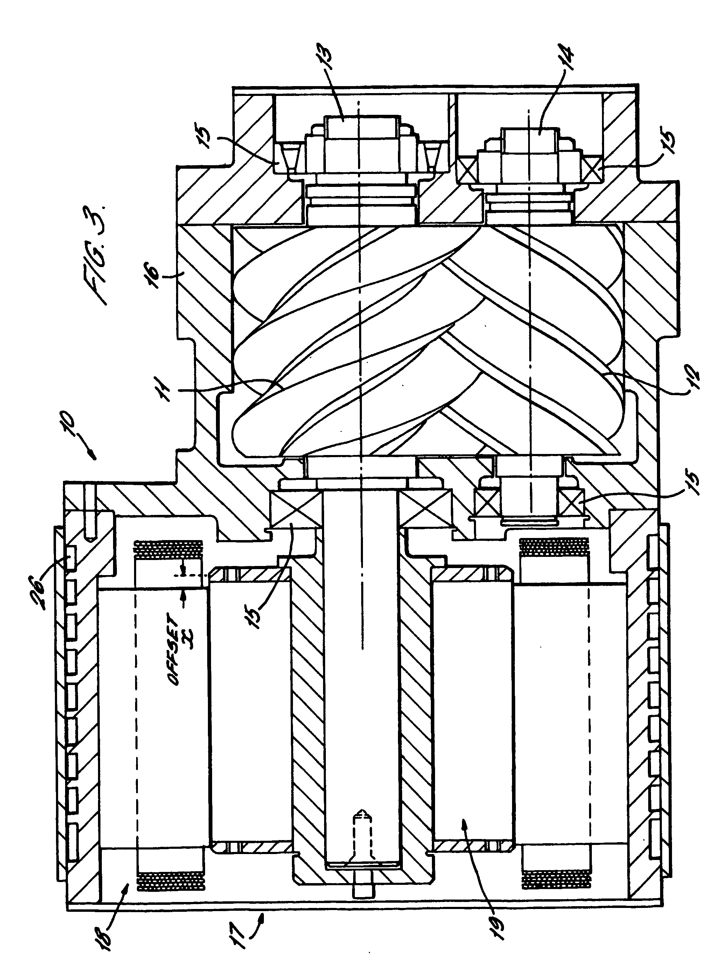

The axial force exerted by the stator (18) flux on the motor rotor (19) can also be used to increase the load on the axial bearings (15) in the compressor (10) on start-up to ensure that the rotor (19) does not contact the end face of the compressor casing bore. This is shown in Fig. 3. In compressors where a single taper roller bearing (15) is used to control both radial and axial forces on the driven rotor (11) the weight of the rotor (11) can tend to allow it to drop when stationary due to the slope of the bearing race. This can then allow the end of the rotor (11) to contact the casing. Under conditions of marginal lubrication this can result in the rotor (11) contacting the casing and causing wear during starting. When running the lubricant is present and the dynamic loads will return the rotor to the appropriate running position in the bearing.

In this embodiment of the invention the motor rotor (19) is designed to be offset in the stator (18) by an amount corresponding to the movement of the rotor in the bearing (typically <0.2mm). Thus on starting, the flux in the winding draws the motor rotor (19) with the compressor rotor (11) attached towards the inlet end of the compressor (10) thus moving the compressor rotor (11) away from the delivery end face of the casing bore. As the motor rotor (19) moves towards its neutral axial position the axial force diminishes and the compressor (10) runs normally.

## Claims

1. A screw compressor assembly for providing compressed gas comprising:
a screw compressor (10) having a casing (16) and at least one pair of intermeshing helically formed screw rotors (11, 12) each of which is mounted on a rotor shaft (13, 14) rotatably mounted within the casing (16) by means of bearings (15); and a switched reluctance motor (17) comprising a stator (18) attached to the casing (16) and a rotor (19) mounted on one of the rotor shafts (13) such that one of the screw rotors (11) is driven directly by the motor (17),
**characterised in that** the position of the motor rotor within the stator is arranged such that, when the motor (17) is not running, the magnetic centre of the motor rotor (19) is offset relative to the magnetic centre of the stator (18) by a predetermined axial distance (x) such that:
i) an axial force is exerted, by the stator flux whilst the motor (17) is running, on the motor rotor (19) relative to the stator (18),
ii) the axial force exerted is proportional to the torque developed by the motor (17),
iii) the axial force is directed to change a load on the screw rotor bearings of the driven screw rotor (11), and
iv) the predetermined axial distance (x) is greater than the axial alignment tolerance between the motor rotor (19) and the stator (18).

2. A screw compressor assembly as claimed in claim 1 in which the motor rotor (19) is positioned relative to the stator (18) to direct the axial force towards a delivery end of the compressor (10).

3. A screw compressor assembly as claimed in claim 1 in which the motor rotor (19) is positioned relative to the stator (18) to direct the axial force to an inlet end of the compressor (10).

4. A screw compressor assembly as claimed in claim 1, wherein the bearings (15) are compliant, thereby allowing the offset, when the motor (17) is running, to decrease in response to the axial force.

5. A screw compressor assembly as claimed in claim 4, wherein the bearings are compliant by 0.2mm.

6. A screw compressor assembly as claimed in any one of the preceding claims, wherein the motor rotor (19) has a number of poles equal to the number of lobes of the driven screw rotor (11), and wherein the poles of the motor rotor (19) are aligned relative to the lobes of the driven screw rotor (11) such that cyclic axial forces exerted on the motor rotor (19) are in phase with cyclic axial loads produced on the screw rotors (11, 12).

7. A screw compressor assembly as claimed in any one of the preceding claims further comprising a cooling system, comprising means for injecting a liquid coolant into the compressor (10), during operation, to cool, seal and lubricate the compressor (10) and bearings (15), wherein the coolant is also used to cool the switched reluctance motor (17).

8. A screw compressor assembly as claimed in claim 7 in which the cooling system comprises a cooling jacket (26) surrounding the switched reluctance motor (17) for receiving a flow of coolant liquid.

9. A screw compressor assembly as claimed in any one of the preceding claims wherein the controller (30) is operable to control the speed of the compressor (10), such that the volume and/or pressure of compressed gas delivered by the screw compressor assembly lies between predetermined limits.

10. A screw compressor assembly as claimed in any one of the preceding claims in which the rotor (19) of the motor (17) is overhung on the bearings (15).

11. A screw compressor assembly as claimed in any one of the preceding claims in which the speed at which the compressor (10) is driven lies in the range of 500 to 25,000 rpm.

12. A screw compressor assembly as claimed in claim 11 in which the speed at which the compressor (10) is driven lies in the range of 1000 to 10,000 rpm.

13. A method of assembling a screw compressor assembly, comprising the steps of:
providing a screw compressor (10) having a casing (16) and at least one pair of intermeshing helically formed screw rotors (11, 12) each of which is mounted on a rotor shaft (13, 14) rotatably mounted within the casing (16) by means of bearings (15);
providing a switched reluctance motor (17) comprising a stator (18) and a rotor (19);
attaching the stator (18) to the casing (16); and
mounting the motor rotor (19) on one of the rotor shafts (13) such that one of the screw rotors (11) is driven directly by the motor (17),
wherein the position of the motor rotor within the stator is arranged such that, the step of mounting the motor rotor (19) comprises systematically offsetting the magnetic centre of the motor rotor (19) relative to the magnetic centre of the stator (18) by a predetermined axial distance (x) such that:
i) an axial force is exerted, by the stator flux whilst the motor (17) is running, on the motor rotor (19) relative to the stator (18),
ii) the axial force exerted is proportional to the torque developed by the motor (17),
iii) the axial force is directed to change a load on the screw rotor bearings of the driven screw rotor (11), and
iv) the predetermined axial distance (x) is greater than the axial alignment tolerance between the motor rotor (19) and the stator (18).

14. A method according to claim 13, wherein the step of mounting the motor rotor (19) comprises aligning the poles of the motor rotor (19) relative to the lobes of the driven screw rotor (11) such that cyclic axial forces exerted on the motor rotor (19) are in phase with cyclic axial loads produced on the screw rotors (11, 12).

## Patentansprüche

1. Schraubenverdichteranordnung zur Bereitstellung verdichteten Gases, umfassend:
einen Schraubenverdichter (10) mit einem Gehäuse (16) und wenigstens einem Paar von kämmenden wendelförmigen Schraubenrotoren (11, 12), von welchen jeder auf eine Rotorwelle (13, 14) montiert ist, welche durch Lager (15) drehbar in dem Gehäuse (16) angebracht sind; und einen geschalteten Reluktanzmotor (17), welcher einen an dem Gehäuse (16) angebrachten Stator (18) und einen Rotor (19) umfasst, der derart an eine der Rotorwellen (13) montiert ist, dass einer der Schraubenrotoren (11) direkt durch den Motor (17) angetrieben ist,
**dadurch gekennzeichnet, dass** die Position des Motorrotors in dem Stator derart angeordnet ist, dass dann, wenn der Motor (17) nicht läuft, das magnetische Zentrum des Motorrotors (19) relativ zu dem magnetischen Zentrum des Stators (18) um einen vorbestimmten Axialabstand (x) versetzt ist, sodass:
(i) durch den Statorfluss, während der Motor (17) läuft, auf den Motorrotor (19) relativ zum Stator (18) eine Axialkraft ausgeübt wird,
(ii) die ausgeübte Axialkraft proportional zu dem von dem Motor (17) entwickelten Drehmoment ist,
(iii) die Axialkraft gerichtet ist, um eine Last auf die Schraubenrotorlager des angetriebenen Schraubenrotors (11) zu ändern, und
(iv) der vorbestimmte Axialabstand (x) größer ist als die axiale Anordnungstoleranz zwischen dem Motorrotor (19) und dem Stator (18).

2. Schraubenverdichteranordnung nach Anspruch 1, bei welcher der Motorrotor (19) relativ zum Stator (18) positioniert ist, um die Axialkraft zu einem Lieferende des Verdichters (10) hin zu richten.

3. Schraubenverdichteranordnung nach Anspruch 1, bei welcher der Motorrotor (19) relativ zu dem Stator (18) positioniert ist, um die Axialkraft zu einem Einlassende des Verdichters (10) hin zu richten.

4. Schraubenverdichteranordnung nach Anspruch 1, bei welcher die Lager (15) komplient sind, wodurch gestattet wird, dass der Versatz dann, wenn der Motor (17) läuft, in Antwort auf die Axialkraft geringer wird.

5. Schraubenverdichteranordnung nach Anspruch 4, bei welcher die Lager um 0,2 mm komplient sind.

6. Schraubenverdichteranordnung nach einem der vorhergehenden Ansprüche, bei welcher der Motorrotor (19) eine Polanzahl aufweist, welche gleich der Anzahl an Nasen des angetriebenen Schraubenrotors (11) ist, und bei welcher die Pole des Motorrotors (19) relativ zu den Nasen des angetriebenen Schraubenrotors (11) derart ausgerichtet sind, dass auf den Motorrotor (19) ausgeübte zyklische Axialkräfte in Phase mit an den Schraubenrotoren (11, 12) erzeugten zyklischen axialen Lasten sind.

7. Schraubenverdichteranordnung nach einem der vorhergehenden Ansprüche, welche ferner ein Kühlsystem umfasst, umfassend Mittel zum Einspritzen einer Kühlflüssigkeit in den Verdichter (10) während eines Betriebs, um den Verdichter (10) und Lager (15) zu kühlen, abzudichten und zu schmieren, wobei das Kühlmittel auch verwendet wird, um den geschalteten Reluktanzmotor (17) zu kühlen.

8. Schraubenverdichteranordnung nach Anspruch 7, bei welcher das Kühlsystem einen Kühlmantel (26) umfasst, welcher den geschalteten Reluktanzmotor (17) umgibt, um eine Kühlflüssigkeitsströmung aufzunehmen.

9. Schraubenverdichteranordnung nach einem der vorhergehenden Ansprüche, bei welcher die Steuer/Regeleinrichtung (30) betreibbar ist, um die Geschwindigkeit des Verdichters (10) zu steuem/regeln, sodass das Volumen und/oder der Druck von verdichtetem Gas, welches durch die Schraubenverdichteranordnung geliefert wird, zwischen vorbestimmten Grenzen liegt.

10. Schraubenverdichteranordnung nach einem der vorhergehenden Ansprüche, bei welcher der Rotor (19) des Motors (17) an den Lagern (15) vorsteht.

11. Schraubenverdichteranordnung nach einem der vorhergehenden Ansprüche, bei welcher die Geschwindigkeit, mit welcher der Verdichter (10) angetrieben wird, im Bereich von 500 bis 25.000 U/min liegt.

12. Schraubenverdichteranordnung nach Anspruch 11, bei welcher die Geschwindigkeit, mit welcher der Verdichter (10) angetrieben wird, im Bereich von 1.000 bis 10.000 U/min liegt.

13. Verfahren eines Zusammenbaus einer Schraubenverdichteranordnung, welches die folgenden Schritte umfasst:
Bereitstellen eines Schraubenverdichters (10) mit einem Gehäuse (16) und wenigstens einem Paar von kämmenden wendelförmigen Schraubenrotoren (11, 12), von welchen jeder an einer Rotorwelle (13, 14) angebracht ist, die in dem Gehäuse (16) mittels Lagern (15) drehbar montiert sind;
Bereitstellen eines geschalteten Reluktanzmotors (17), umfassend einen Stator (18) und einen Rotor (19);
Anbringen des Stators (18) an dem Gehäuse (16); und
Montieren des Motorrotors (19) an eine der Rotorwellen (13), sodass einer der Schraubenrotoren (11) direkt durch den Motor (17) angetrieben ist,
wobei die Position des Motorrotors in dem Stator derart angeordnet wird, dass der Schritt des Montierens des Motorrotors (19) ein systematisches Versetzen des magnetischen Zentrums des Motorrotors (19) relativ zum magnetischen Zentrum des Stators (18) um einen vorbestimmten Axialabstand (x) umfasst, sodass:
(i) durch den Statorfluss, während der Motor (17) läuft, eine Axialkraft auf den Motorrotor (19) relativ zum Stator (18) ausgeübt wird,
(ii) die ausgeübte Axialkraft dem von dem Motor (17) entwickelten Drehmoment proportional ist,
(iii) die Axialkraft gerichtet ist, um eine Last auf die Schraubenrotorlager des angetriebenen Schraubenrotors (11) zu ändern, und
(iv) der vorbestimmte Axialabstand (x) größer ist als die axiale Anordnungstoleranz zwischen dem Motorrotor (19) und dem Stator (18).

14. Verfahren nach Anspruch 13, bei welchem der Schritt des Montierens des Motorrotors (19) ein Anordnen der Pole des Motorrotors (19) relativ zu den Nasen des angetriebenen Schraubenrotors (11) derart umfasst, dass auf den Motorrotor (19) ausgeübte zyklische Axialkräfte in Phase mit an den Schraubenrotoren (11, 12) erzeugten zyklischen Axiallasten sind.

## Revendications

1. Ensemble de compresseur hélicoïdal pour délivrer du gaz comprimé comprenant :
un compresseur hélicoïdal (10) ayant une enveloppe (16) et au moins deux rotors hélicoïdaux formés hélicoïdalement s'engrenant (11, 12) chacun desquels est monté sur un arbre de rotor (13, 14) monté en rotation à l'intérieur de l'enveloppe (16) au moyen de paliers (15) ; et un moteur à reluctance possédant une caractéristique de commutation (17) comprenant un stator (18) fixé à l'enveloppe (16) et un rotor (19) monté sur un des arbres de rotor (13) de manière qu'un des rotors hélicoïdaux (11) soit entraîné directement par le moteur (17),
**caractérisé en ce que** la position du rotor de moteur à l'intérieur du stator est agencée de manière que, quand le moteur (17) ne tourne pas, le centre magnétique du rotor du moteur (19) soit décalé par rapport au centre magnétique du stator (18) d'une distance axiale prédéterminée (x) de manière que :
i) une force axiale soit exercée, par le flux statorique lorsque le moteur (17) tourne, sur le rotor du moteur (19) par rapport au stator (18),
ii) la force axiale exercée soit proportionnelle au couple développé par le moteur (17),
iii) la force axiale soit orientée pour changer une charge sur les paliers du moteur hélicoïdal du moteur hélicoïdal entraîné (11), et
iv) la distance axiale prédéterminée (x) soit supérieure à la tolérance d'alignement axial entre le rotor (19) et le stator (18) du moteur.

2. Ensemble de compresseur hélicoïdal selon la revendication 1, dans lequel le rotor de moteur (19) est positionné par rapport au stator (18) pour orienter la force axiale vers une extrémité de décharge du compresseur (10).

3. Ensemble de compresseur hélicoïdal selon la revendication 1, dans lequel le rotor du moteur (19) est positionné par rapport au stator (18) pour orienter la force axiale vers une extrémité d'entrée du compresseur (10).

4. Ensemble de compresseur hélicoïdal selon la revendication 1, dans lequel les paliers (15) sont élastiques, en permettant ainsi au décalage, quand le moteur (17) tourne, de diminuer en réponse à la force axiale.

5. Ensemble de compresseur hélicoïdal selon la revendication 4, dans lequel les paliers sont élastiques de 0,2 mm.

6. Ensemble de compresseur hélicoïdal selon l'une quelconque des revendications précédentes, dans lequel le rotor du moteur (19) a un nombre de pôles égal au nombre de lobes du rotor hélicoïdal entraîné (11) et dans lequel les pôles du rotor du moteur (19) sont alignés par rapport aux lobes du rotor hélicoïdal entraîné (11) de manière que des forces axiales cycliques exercées sur le rotor du moteur (19) soient en phase avec des charges axiales cycliques engendrées sur les rotors hélicoïdaux (11, 12).

7. Ensemble de compresseur hélicoïdal selon l'une quelconque des revendications précédentes, comprenant en outre un système de refroidissement, comprenant des moyens pour injecter un réfrigérant liquide à l'intérieur du compresseur (10), durant le fonctionnement, pour refroidir, étanchéifier et lubrifier le compresseur (10) et les paliers (15), dans lequel le réfrigérant est également utilisé pour refroidir le moteur à réluctance possédant une caractéristique de commutation (17).

8. Ensemble de compresseur hélicoïdal selon la revendication 7, le système de refroidissement comprend une chemise de refroidissement (26) entourant le moteur à reluctance possédant une caractéristique de commutation (17) pour recevoir un flux de liquide réfrigérant.

9. Ensemble de compresseur hélicoïdal selon l'une quelconque des revendications précédentes, dans lequel le dispositif de contrôle (30) peut fonctionner pour commander la vitesse du compresseur (10), de manière que le volume et/ou la pression du gaz comprimé déchargé par l'ensemble de compresseur hélicoïdal se trouve entre des limites prédéterminées.

10. Ensemble de compresseur hélicoïdal selon l'une quelconque des revendications précédentes, le rotor (19) du moteur (17) est porté en saillie sur les paliers (15).

11. Ensemble de compresseur hélicoïdal selon l'une quelconque des revendications précédentes, la vitesse à laquelle le compresseur (10) est entraîné se trouve dans la plage de 500 à 25000 tr/min.

12. Ensemble de compresseur hélicoïdal selon la revendication 11, la vitesse à laquelle le compresseur (10) est entraîné se trouve dans la plage de 1000 à 10000 tr/min.

13. Procédé d'assemblage d'un ensemble de compresseur hélicoïdal comprenant les étapes consistant à :
disposer un compresseur hélicoïdal (10) ayant une enveloppe (16) et au moins deux rotors hélicoïdaux formés hélicoïdalement s'engrenant (11, 12) chacun desquels étant monté sur un arbre de rotor (13, 14) monté en rotation à l'intérieur de l'enveloppe (16) au moyen de paliers (15) ;
disposer un moteur à reluctance commutée (17) comprenant un stator (18) et un rotor (19) ;
fixer le stator (18) à l'enveloppe (16) ; et
monter le rotor de moteur (19) sur un des arbres de rotor (13) de manière qu'un des rotors hélicoïdaux (11) soit entraîné directement par le moteur (17),
dans lequel la position du rotor de moteur à l'intérieur du stator est agencée de manière que l'étape de montage du rotor de moteur (19) comprend de décaler symétriquement le centre magnétique du rotor du moteur (19) par rapport au centre magnétique du stator (18) d'une distance axiale prédéterminée (x) de manière que :
i) une force axiale soit exercée, par le flux statorique lorsque le moteur (17) tourne, sur le rotor du moteur (19) par rapport au stator (18),
ii) la force axiale exercée soit proportionnelle au couple développé par le moteur (17),
iii) la force axiale soit orientée pour changer une charge sur les paliers du moteur hélicoïdal du moteur hélicoïdal entraîné (11), et
iv) la distance axiale prédéterminée (x) soit supérieure à la tolérance d'alignement axial entre le rotor (19) et le stator (18) du moteur.

14. Procédé selon la revendication 13, dans lequel l'étape de montage du rotor du moteur (19) comprend d'aligner les pôles du rotor du moteur (19) par rapport aux lobes du rotor hélicoïdal entraîné (11) de manière que des forces axiales cycliques exercées sur le rotor du moteur (19) soient en phase avec des charges axiales cycliques engendrées sur les rotors hélicoïdaux (11, 12).
